# DEMANDE DE BREVET EUROPEEN

(11) **EP 0 927 847 A1**
(43) Date de publication de la demande: **07.07.1999**
(21) Numéro de dépôt: 98420247.3
(22) Date de dépôt: 29.12.1998
(51) Int. Cl.: F16K 27/00, F16K 27/12

(54) **Event pour coffret enterré**

(30) Priorité: 30.12.1997 FR 9716858
(71) Demandeur: MECELEC INDUSTRIES, 07300 Tournon sur Rhône (FR)
(72) Inventeur: Sage, Michel, 07300 Tournon (FR); Senebier, Claude, 26000 Valence (FR)
(74) Mandataire: Myon, Gérard Jean-Pierre

(57) **Abrégé**

L'évent comprend, d'une part, un tube (10) mettant en communication le volume intérieur du coffret et l'atmosphère ambiante (A) et, d'autre part, un manchon (11) fixé dans le sol et affleurant à la surface (S) du sol. Ce manchon est pourvu d'un couvercle ajouré (14) apte à obturer un volume intérieur (13) du manchon défini par un corps principal (12) globalement cylindrique. Le manchon comprend une coiffe (30) de réception d'une extrémité (10a) du tube, la coiffe étant disposée radialement à l'extérieur du corps principal. Le volume intérieur (31) de la coiffe est relié fluidiquement au volume intérieur du corps principal par au moins une ouverture (32) ménagée dans une paroi du corps principal.

L'évent de l'invention est efficace et n'a pas tendance à se boucher alors qu'il ne dépasse pas au-dessus de la surface (S) du sol et qu'il ne gêne pas le curage du volume intérieur du manchon (11) ou du tube de drainage (15) qui lui est associé.

## Description

L'invention a trait à un évent pour coffret enterré tel que, par exemple, un coffret à l'intérieur duquel est disposé un équipement de branchement en gaz d'un local industriel ou d'une habitation comprenant généralement un robinet et un régulateur.

Un tel évent a essentiellement deux fonctions, à savoir :
- mettre le régulateur à la pression atmosphérique, ce qui est nécessaire pour un bon fonctionnement car cette pression sert de référence ;
- éviter l'accumulation de gaz a l'intérieur du coffret, notamment en cas de fuite au niveau des raccordements ou de l'équipement lui-même.

Il est connu de relier l'intérieur du coffret à l'atmosphère ambiante à proximité de ce coffret au moyen d'un tube d'évent. L'extrémité libre du tube d'évent, c'est-à-dire l'extrémité distante du coffret, est disposée le long de la façade d'un bâtiment à une hauteur généralement comprise entre 300 et 500 mm par rapport à la surface du sol. Ce positionnement de l'extrémité libre du tube d'évent en hauteur permet d'éviter le déversement d'eaux de ruissellement, de terre ou de déchets dans cet évent. Ceci est impératif afin d'éviter la formation d'un bouchon dans le tube d'évent ou le remplissage du coffret, notamment avec les eaux de ruissellement.

Or, il n'est pas toujours possible d'installer un tube d'évent le long d'une façade de bâtiment. Par exemple, dans les zones commerciales, il arrive que la vitrine d'un magasin descende jusqu'à la hauteur du sol. Il n'est alors pas possible techniquement de fixer de façon sûre le tube d'évent sur la vitrine. En outre, dans cette configuration, le tube d'évent est particulièrement inesthétique, ce qui n'est pas acceptable pour le commerçant. La situation est analogue en ce qui concerne des bâtiments historiques dont la façade ne peut être modifiée par adjonction d'un tube d'évent.

Par ailleurs, il est connu de curer ou de nettoyer les regards ou les drains disposés dans le sol au moyen d'un aspirateur ou d'une pince à plusieurs branches permettant de récupérer, au fond de ces regards, les déchets ou les feuilles qui ont tendance à s'y accumuler. Afin de pouvoir utiliser efficacement ces outils, il est nécessaire de ne pas disposer, dans un regard ou un drain, un élément qui pourrait gêner leur introduction.

C'est à ces problèmes qu'entend répondre l'invention en proposant un évent pour coffret enterré ne nécessitant pas la pose du tube d'évent sur une façade en hauteur par rapport au niveau du sol et permettant l'utilisation d'un aspirateur ou d'une pince pour le curage d'un drain ou d'un regard.

Dans cet esprit, l'invention concerne un évent pour coffret enterré, ledit évent comprenant un tube mettant en communication le volume intérieur dudit coffret et l'atmosphère ambiante à proximité dudit coffret et un manchon fixé dans le sol et affleurant à la surface du sol, ledit manchon étant pourvu d'un couvercle ajouré apte à obturer un volume intérieur dudit manchon défini par un corps principal globalement cylindrique, caractérisé en ce que ledit manchon comprend une coiffe de réception d'une extrémité dudit tube, ladite coiffe étant disposée radialement à l'extérieur dudit corps principal dudit manchon, le volume intérieur de ladite coiffe étant relié fluidiquement au volume intérieur dudit corps principal par au moins une ouverture ménagée dans une paroi dudit corps principal.

Grâce à l'invention, l'extrémité du tube d'évent peut être placée dans la coiffe radiale à l'extérieur du corps principal, de sorte qu'elle est protégée contre les écoulements et les déchets qui peuvent traverser les ajours du couvercle. En outre, le volume intérieur du corps principal et d'un éventuel tube de drainage peut être facilement nettoyé grâce à un aspirateur ou une pince, sans interférence avec le tube d'évent, alors que l'extrémité du tube d'évent est fluidiquement reliée au volume intérieur du manchon, ce qui lui permet d'être en communication avec l'atmosphère extérieure à travers le couvercle ajouré. En d'autres termes, l'extrémité libre du tube d'évent est mise en communication avec l'atmosphère extérieure sans dépasser au-dessus du sol, sans risquer d'être obturée par des déchets ou remplie d'eau et sans gêner le nettoyage du volume intérieur principal du drain ou du regard.

Selon un premier aspect avantageux de l'invention, la coiffe est pourvue d'une bordure inférieure à deux niveaux, la partie de la bordure inférieure la plus proche du corps principal étant disposée au niveau supérieur. Cet aspect de l'invention facilite l'immobilisation du tube d'évent par rapport à l'extension radiale et ce, indépendamment du diamètre extérieur de ce tube d'évent.

Selon un autre aspect avantageux de l'invention, la coiffe comprend, sur une partie au moins de sa circonférence interne, une collerette de butée de l'extrémité du tube. Cette collerette évite que l'extrémité libre du tube d'évent ne pénètre trop profondément à l'intérieur de la coiffe radiale, ce qui pourrait avoir pour effet de limiter la communication fluidique entre l'intérieur du tube d'évent et l'atmosphère extérieure.

Selon un autre aspect avantageux de l'invention, le corps principal est pourvu d'une bordure inférieure à deux niveaux. Cet aspect de l'invention permet de solidariser un tube de drainage à la partie inférieure du corps principal du manchon grâce à un lien flexible et ce, indépendamment des diamètres relatifs du corps principal et du tube de drainage.

Dans les cas envisagés ci-dessus, la partie de la bordure inférieure disposée au niveau inférieur est avantageusement pourvue d'un moyen de retenue d'un lien entourant cette partie et une extrémité supérieure d'un tube. On peut, notamment, prévoir que la partie de la bordure inférieure disposée au niveau inférieur est pourvue d'une collerette s'étendant radialement vers l'extérieur.

Selon un autre aspect avantageux de l'invention, le couvercle est pourvu d'une tige apte à pénétrer dans un orifice correspondant d'une patte intérieure du corps principal, cette tige étant verrouillée par rapport à la patte. Cet aspect de l'invention permet que l'on puisse soulever le couvercle pour accéder à l'intérieur du manchon en vue de son nettoyage, notamment à l'aide d'une pince articulée. Le verrouillage de la tige par rapport à la patte constitue un dispositif d'imperdabilité du couvercle. Dans ce cas, l'on peut prévoir que le couvercle comprend une jupe de centrage par rapport au corps principal, cette jupe étant interrompue de part et d'autre de la tige. Cette interruption permet la mise en place du couvercle sans interférence avec la patte de réception de la tige.

Selon un autre aspect avantageux de l'invention, l'évent comprend un tube de drainage dont l'extrémité supérieure est coiffée par le manchon. Ce tube de drainage permet de recevoir des eaux de ruissellement, notamment des eaux pluviales, et éventuellement des déchets qui peuvent s'y accumuler. Dans ce cas, on peut prévoir que le corps principal comprend, sur une partie au moins de sa circonférence interne, une collerette de butée de l'extrémité supérieure du tube de drainage. Cette collerette contribue au positionnement précis du tube de drainage par rapport au manchon.

L'invention sera mieux comprise et d'autres avantages de celle-ci apparaîtront plus clairement à la lumière de la description qui va suivre d'un mode de réalisation d'un évent pour coffret enterré conforme à l'invention, donnée uniquement à titre d'exemple et faite en référence aux dessins annexés dans lesquels :
- la figure 1 est une représentation schématique de principe de l'implantation d'un coffret enterré dans le sol grâce à un évent conforme à l'invention ;
- la figure 2 est une coupe axiale à plus grande échelle de l'évent représenté à la figure 1 et
- la figure 3 est une vue en perspective du manchon de l'évent représenté à la figure 1.

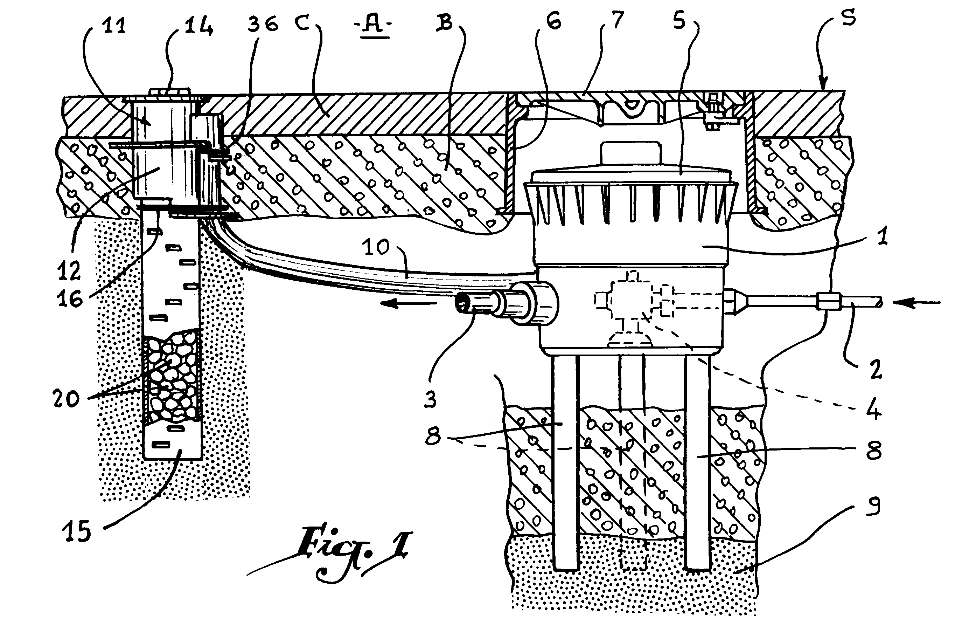

A la figure 1, un coffret 1 enterré dans le sol est connecté à une conduite 2 d'amenée de gaz à partir du réseau et à une conduite 3 de distribution de gaz à un site d'utilisation, tel qu'une habitation ou un local industriel. Le coffret 1 renferme un équipement 4, tel qu'un compteur, un régulateur ou un robinet de commande de l'écoinlement du gaz transitant de la conduite 2 vers la conduite 3. Le coffret est équipé d'un couvercle 5, également enterré, alors qu'un cadre 6 est prévu au-dessus du coffret 1 pour supporter un tampon 7 au niveau de la surface S du sol. Trois pieds 8 disposés à 120° assurent le positionnement du coffret 1 sur un lit de sable 9.

Un tube d'évent 10 est prévu pour relier l'intérieur du coffret 1 à l'atmosphère ambiante A.

En partant du coffret 1, le tube 10 est dirigé globalement parallèlement à la conduite 3, puis est courbé ou cintré par rapport à la surface S du sol. En pratique, le tube 10 est un tube en matériau plastique flexible, et notamment, un tube en polychlorure de vinyle (PVC) ou équivalent. Selon un aspect non représenté, le tube 10 peut être annelé, ce qui lui confère une flexibilité et une résistance à l'écrasement satisfaisantes. Le caractère flexible du tube 10 facilite son installation, en particulier au niveau de sa partie cintrée.

Conformément à l'invention, le tube 10 ne dépasse pas audessus de la surface S du sol. Un manchon 11 est disposé dans le sol de telle sorte qu'il est affleurant à la surface S. Ce manchon comprend un corps principal 12 de forme globalement cylindrique qui définit un volume intérieur 13 obturé par un couvercle ajouré 14.

Un tube de drainage 15 est disposé dans le sol sous le manchon 11 et l'extrémité supérieure 15a du tube de drainage 15 pénètre dans la partie inférieure du corps 12 jusqu'à venir en appui contre une collerette 12a s'étendant radialement vers l'intérieur dans le corps 12. La collerette 12a peut s'étendre sur tout ou partie de la circonférence intérieure du corps 12; elle peut s'étendre sur un ou plusieurs secteurs angulaires.

Pour faciliter le maintien du tube de drainage 15 par rapport au corps 12, celui-ci est pourvu d'une bordure inférieure 12b comprenant une première partie 12b₁ située à une distance d₁ par rapport à la surface S, c'est-à-dire par rapport au couvercle 14, et une seconde partie 12b₂ située à une distance d₂ par rapport à la surface S supérieure à la distance d₁. Les parties 12b₁) et 12b₂ correspondent chacune sensiblement à un demi-cercle. Un lien flexible 16 tel qu'un collier ou un feuillard peut être disposé à une distance d₃ du couvercle 14 comprise entre les distances d₁ et d_{2,} de sorte qu'il peut venir en appui contre la surface extérieure de l'extrémité supérieure 15a du tube de drainage 15 et contre la surface extérieure du corps principal 12 du côté de la partie 12b₂ de la bordure. Ceci permet, en serrant le lien 16, d'immobiliser fermement le tube de drainage 15 par rapport au corps 12 et ce, indépendamment du diamètre du corps 15, pour autant que son extrémité 15a a pu être logée dans le volume 13.

Le tube 15 est percé d'orifices 15b d'évacuation de l'eau et sa partie inférieure est avantageusement remplie de galets 20.

Une collerette 18 s'étend radialement vers l'extérieur à partir de la surface extérieure du corps 12. Cette collerette a pour fonction d'améliorer l'ancrage du manchon 11 dans le sol, notamment dans une assise en béton B.

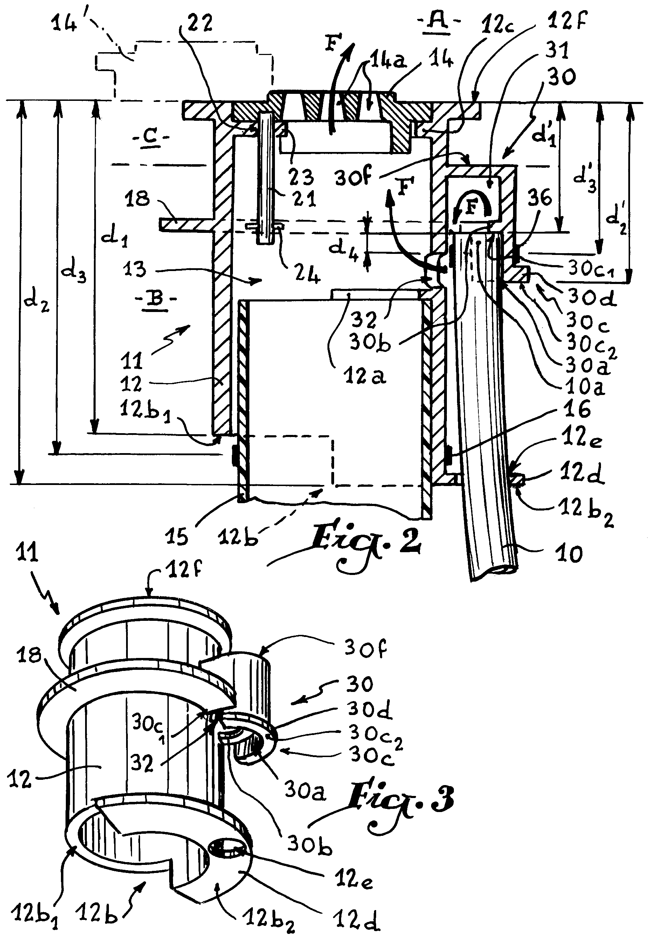

Le couvercle 14 est pourvu d'une tige 21 prévue pour pénétrer dans un orifice 22 d'une patte 23 ménagée à l'intérieur du corps principal 12. Une goupille 24 permet d'éviter l'extraction de la tige 21 par rapport à l'orifice 22. En revanche, la tige 21 peut coulisser dans 1'orifice 22, ce qui permet de soulever le couvercle 14 et de le faire pivoter autour de l'axe de la tige 21, tel que représenté en 14' en traits mixtes à la figure 2, de façon à libérer l'accès au volume intérieur 13 et à l'intérieur du tube de drainage 15 en vue du curage de ceux-ci. On note que, lorsque le couvercle est dans la position 14', rien ne vient gêner la pénétration d'une buse d'aspiration, d'une pince de nettoyage, voire de la main d'un opérateur, dans le volume 13 ou à l'intérieur du tube de drainage 15.

Sur sa face tournée vers le volume 13, le couvercle 14 porte une jupe 14b destinée à permettre son centrage par rapport au débouché du corps principal 12 défini par une collerette interne 12c. La jupe 14b est interrompue au niveau de la patte 23, c'est-à-dire de part et d'autre de la tige 21, pour éviter toute interférence entre elles lors de la mise en place du couvercle.

L'extrémité 10a du tube d'évent 10 est logée dans une coiffe 30 radiale par rapport au corps principal 12 et appartenant au manchon 11. Cette coiffe 30 comprend une ouverture sensiblement circulaire 30a dans laquelle peut être insérée l'extrémité 10a du tube 10 jusqu'à venir en butée contre une collerette interne 30b qui s'étend, en un ou plusieurs secteurs angulaires, sur une partie au moins de la circonférence interne de la coiffe 30.

Le volume intérieur 31 de la coiffe 30 est relié au volume intérieur 13 du corps principal 12 par une ouverture 32 ménagée dans une paroi latérale du corps 12. Ainsi, du gaz en provenance du coffret 1 à travers le tube d'évent 10 peut circuler de l'extrémité 10a vérs l'atmosphère ambiante à travers le volume 31, l'ouverture 32, le volume 13 et les orifices 14a du couvercle 14 comme représenté par les flèches F à la figure 2.

L'ouverture 32 est située en dessous de l'extrémité 10a du tube 10. La distance d₄ séparant l'extrémité 10a du bord supérieur de l'ouverture 32 est comprise entre 1 et 15 mm, de préférence de l'ordre de 5mm. Ainsi, aucun liquide en provenance du volume 13 ne peut se déverser dans le tube 10.

La coiffe 30 est disposée en retrait par rapport à la surface 12f du corps 12 affleurante à la surface du sol. Plus précisément, la surface supérieure 30f de la coiffe 30 est située environ 3 cm en dessous de la surface 12f. Ainsi, une couche de finition C recouvre la surface 30f lorsque le manchon 11 est scellé, ce qui améliore son esthétique en ne laissant apparaître que la surface 12f et le couvercle 14.

La bordure inférieure 30c de la coiffe 30 est, comme la bordure du corps principal 12, disposée à deux niveaux correspondant à des distances d'₁ et d'₂ différentes par rapport à la surface S du sol. On note 30c₁ la partie de la bordure 30c située au niveau d'₁ et 30c₂ la partie de la bordure 30c située au niveau d'₂. Il est possible de disposer un lien flexible 36 a une distance d'₃ comprise entre les distance d'₁ et d'₂ par rapport à la surface S, de façon à immobiliser fermement l'extrémité 10a du tube 10 par rapport à la coiffe radiale 30 et ce, quel que soit le diamètre du tube 10.

Les parties 12b₂ et 30c₂ des bordures inférieures 12b et 30c du corps principal 12 et de la coiffe 30 sont chacune pourvues d'une collerette externe, respectivement notées 12d et 30d qui permettent de retenir le lien 16 ou 36 lorsqu'il est légèrement distendu, notamment lors de sa mise en place.

La collerette 12d est également pourvue d'un orifice 12e de passage du tube 10. Cet orifice guide le tube 10 à proximité du manchon 11, ce qui permet de le maintenir éloigné de la surface S à proximité du manchon 11 et de le protéger des contraintes mécaniques en provenance de cette surface.

## Revendications

1. Event pour coffret enterré, (1) ledit évent comprenant un tube (10) mettant en communication le volume intérieur dudit coffret et l'atmosphère ambiante (A) à proximité dudit coffret et un manchon (11) fixé dans le sol et affleurant à la surface (S) du sol, ledit manchon étant pourvu d'un couvercle ajouré (14) apte à obturer un volume intérieur (13) dudit manchon défini par un corps principal globalement cylindrique (12), caractérisé en ce que ledit manchon comprend une coiffe (30) de réception d'une extrémité (10a) dudit tube, ladite coiffe étant disposée radialement à l'extérieur dudit corps principal dudit manchon, le volume intérieur (31) de ladite coiffe étant relié fluidiquement au volume intérieur dudit corps principal par au moins une ouverture (32) ménagée dans une paroi dudit corps principal.

2. Event selon la revendication 1, caractérisé en ce que ladite coiffe (30) est pourvue d'une bordure inférieure (30c) à deux niveaux (d'₁, d'₂), la partie (30c₁) de ladite bordure inférieure la plus proche dudit corps principal (12) étant disposée au niveau supérieur (d'₁)

3. Event selon la revendication 1, caractérisé en ce que ladite coiffe (30) comprend, sur une partie au moins de sa circonférence interne, une collerette (30b) de butée de ladite extrémité (10a) dudit tube (10).

4. Event selon l'une des revendications précédentes, caractérisé en ce que ledit corps principal (12) est pourvu d'une bordure inférieure (12b) à deux niveaux (d₁, d₂).

5. Event selon l'une des revendications 2 ou 4, caractérisé en ce que la partie (12b₂, 30c₂) de ladite bordure inférieure (12b, 30c) disposée au niveau inférieur (d₂, d'₂) est pourvue d'un moyen (12d, 30d) de retenue d'un lien (16, 36) entourant ladite partie et une extrémité supérieure (10a, 15a) d'un tube (10, 15).

6. Event selon la revendication 5, caractérisé en ce que ladite partie (12b₂, 30c₂) de ladite bordure inférieure (12b, 30c) disposée au niveau inférieur (d₂, d'₂) est pourvue d'une collerette (12d, 30d) s'étendant radialement vers l'extérieur.

7. Event selon l'une des revendications précédentes, caractérisé en ce que' ledit couvercle (14) est pourvu d'une tige (21) apte à pénétrer dans un orifice (22) correspondant d'une patte (23) intérieure dudit corps principal (12), ladite tige étant verrouillée (24) par rapport à ladite patte.

8. Event selon la revendication 7, caractérisé en ce que ledit couvercle (14) comprend une jupe de centrage (14b) par rapport audit corps principal (12), ladite jupe étant interrompue de part et d'autre de ladite tige (21).

9. Event selon l'une des revendications précédentes, caractérisé en ce qu'il comprend un tube de drainage (15) dont l'extrémité supérieure (15a) est coiffée par ledit manchon (11).

10. Event selon la revendication 9, caractérisé en ce que ledit corps principal (12) comprend, sur une partie au moins de sa circonférence interne, une collerette (12a) de butée de ladite extrémité supérieure (15a) dudit tube de drainage (15).
